# EUROPÄISCHE PATENTSCHRIFT

(11) **EP 0 550 742 B1**
(45) Veröffentlichungstag und Bekanntmachung des Hinweises auf die Patenterteilung: **21.06.1995**
(21) Anmeldenummer: 92917084.3
(22) Anmeldetag: 05.08.1992
(51) Int. Cl.: B60T 13/567

(54) **BREMSBETÄTIGUNGSBAUGRUPPE FÜR KRAFTFAHRZEUGE**
BRAKE ACTUATING UNIT FOR MOTOR VEHICLES
ENSEMBLE D'ACTIONNEMENT DES FREINS POUR VEHICULES A MOTEUR

(30) Priorität: 05.08.1991 DE 9109689 U
(43) Veröffentlichungstag der Anmeldung: 14.07.1993
(73) Patentinhaber: LUCAS INDUSTRIES PUBLIC LIMITED COMPANY, Solihull, West Midlands B91 3TX (GB)
(72) Erfinder: HEIBEL, Helmut, D-5431 Moschheim (DE); PIKKENHAHN, Josef, D-5472 Plaidt (DE)
(74) Vertreter: Goetz, Rupert, Dipl.-Ing.
(86) Internationale Anmeldenummer: EP9201779
(87) Internationale Veröffentlichungsnummer: WO9302901

(56) Entgegenhaltungen:
- EP-A- 0 052 472
- EP-A- 0 215 586
- EP-A- 0 331 535
- EP-A- 0 340 534
- EP-A- 0 348 273
- WO-A-90/11215

## Beschreibung

Die Erfindung betrifft eine Bremsbetätigungsbaugruppe für Kraftfahrzeuge, mit
- einem pneumatischen Bremskraftverstärker, der ein hinteres Gehäuseteil mit einem nach hinten von ihm wegragenden Rohrstutzen aufweist und in eine Öffnung in der Spritzwand eines Kraftfahrzeugs einsetzbar ist,
- einer Montageplatte, die zum Verschließen der Öffnung an der Spritzwand befestigbar ist, und
- einer Pedalanordnung, die in der Nähe des Rohrstutzens angeordnete Lagerböcke aufweist.

Der zunehmende Einsatz von Montageautomaten (Robotern) in der Endmontage von Kraftfahrzeugen hat zu der Forderung an Hersteller von Zulieferteilen geführt, solche Teile möglichst weitgehend mit benachbarten Bauteilen zu Baugruppen zusammenzufassen und diese in einem Zustand zu liefern, der eine automatisierte Endmontage ermöglicht und anschließende Einstellarbeiten entbehrlich macht.

Für Bremskomponenten bedeutet dies, daß eine beim Bremsenhersteller vormontierte und einjustierte Baugruppe zum Betätigen der Bremsen verlangt wird, die beim Fahrzeughersteller nur noch mechanisch befestigt und hydraulisch an die Bremsen angeschlossen zu werden braucht.

Aus der EP 0348273 A1 ist eine Bremsbetätigungsbaugruppe der eingangs beschriebenen Gattung bekannt, bei der die Montageplatte zusammen mit einem vorderen Gehäuseteil des Bremskraftverstärkers einstückig als Preß- oder Tiefziehteil hergestellt ist und zwei Lagerböcke für Brems- und Kupplungspedal auf je einer Seite des Bremskraftverstärkers an die Montageplatte angeschweißt sind. Bei dieser bekannten Gestaltung und Anordnung der die Bremsbetätigungsbaugruppe bildenden Bauteile hat der Hersteller der Baugruppe nicht die Möglichkeit, eine und dieselbe Montageplatte nach Bedarf wahlweise mit unterschiedlichen Bremskraftverstärkern zusammenzubauen, z.B. einen Bremskraftverstärker in Zweikammerbauweise durch einen mit vier Kammern in Tandemanordnung zu ersetzen. Die Lagerböcke müssen, ehe sie an die Montageplatte angeschweißt werden können, genau positioniert werden; dazu ist eine aufwendige Vorrichtung erforderlich, die jeweils durch eine andere Vorrichtung ersetzt werden muß, wenn sich die Form der Lagerböcke oder deren Abstand voneinander ändert.

Der Erfindung liegt deshalb die Aufgabe zugrunde, eine Bremsbetätigungsbaugruppe für Kraftfahrzeuge derart zu gestalten, daß sie sich an unterschiedliche Anforderungen durch entsprechende Auswahl der einzelnen Bauteile leicht anpassen läßt und einen einfachen Zusammenbau dieser Bauteile ermöglicht.

Die Aufgabe ist erfindungsgemäß ausgehend von einer Bremsbetätigungsbaugruppe der eingangs beschriebenen Gattung dadurch gelöst, daß
- die Montageplatte ein vom Bremskraftverstärker unabhängiges Bauteil mit einem zentralen Loch ist,
- das hintere Gehäuseteil des Bremskraftverstärkers mit seinem Rohrstutzen durch das zentrale Loch nach hinten hindurchgreifend an der Montageplatte befestigt ist, und
- die Lagerböcke einstückig mit einer gemeinsamen Versteifungsplatte ausgebildet sind, die eine zentrale Aussparung aufweist, durch welche sich der Rohrstutzen ebenfalls hindurcherstreckt.

Der vom hinteren Gehäuseteil des Bremskraftverstärkers in an sich bekannter Weise nach hinten ragende Rohrstutzen wird somit als Bezugsbauteil zum Positionieren der Montageplatte und der Pedalanordnung in bezug zueinander und zum Bremskraftverstärker verwendet. Dabei können sowohl die Montageplatte wie die Versteifungsplatte entweder unmittelbar oder mittelbar - die Versteifungsplatte über die Montageplatte oder umgekehrt - an dem Rohrstutzen zentriert werden. In jedem Fall kann die Pedalbaugruppe vollständig vormontiert sein, ehe die Versteifungsplatte mit der Montageplatte und dem Bremskraftverstärker zusammengebaut wird. Eine und dieselbe Montageplatte kann wahlweise mit Bremskraftverstärkern unterschiedlicher Durchmesser und/oder unterschiedlicher Länge zusammengebaut werden, sofern die nach hinten ragenden Rohrstutzen dieser Bremskraftverstärker entweder den gleichen Durchmesser haben oder etwaige Durchmesserunterschiede durch einen einfachen ringförmigen Adapter ausgeglichen werden. In entsprechender Weise kann eine und dieselbe Montageplatte wahlweise mit unterschiedlichen Pedalanordnungen zusammengebaut werden.

Bei einer bevorzugten Ausführungsform der Erfindung weist die Montageplatte rings um ihr zentrales Loch einen Kragen auf, an dessen Innenseite der Rohrstutzen, und an dessen Außenseite die Versteifungsplatte zentriert ist.

Weitere vorteilhafte Ausgestaltungen der Erfindung ergeben sich aus den Ansprüchen 3 bis 6.

Ausführungsbeispiele der Erfindung werden im folgenden anhand schematischer Zeichnungen mit weiteren Einzelheiten beschrieben. Es zeigen:
- Fig. 1: eine in ein Kraftfahrzeug eingebaute Bremsbetätigungsbaugruppe in Seitenansicht und teilweise im Längsschnitt;
- Fig. 2: die Ansicht von hinten in Richtung des Pfeils II in Fig. 1;
- Fig. 3: eine abgewandelte, ebenfalls in ein Kraftfahrzeug eingebaute Bremsbetätigungsbaugruppe in Seitenansicht und teilweise im Längsschnitt; und
- Fig. 4: die Ansicht von hinten in Richtung des Pfeils IV in Fig. 3.

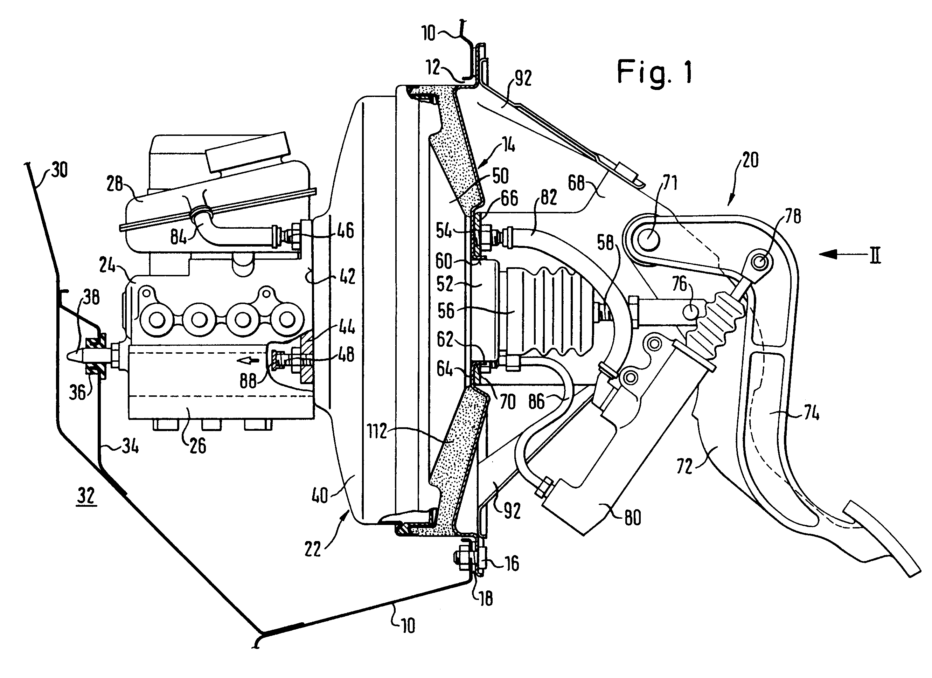

Fig. 1 zeigt einen Teil einer zu einem Kraftfahrzeug gehörigen Spritzwand 10, in der eine Öffnung 12 ausgebildet ist. Die Öffnung 12 ist mit einer Montageplatte 14 verschlossen, die mit Schrauben 16 an der Spritzwand 10 befestigt ist, wobei eine Dichtung 18 zwischengelegt ist. Die Montageplatte 14 sowie eine Pedalanordnung 20, ein pneumatischer Bremskraftverstärker 22, ein Hauptbremszylinder 24, eine Regeleinheit 26 für ein Antiblockiersystem (ABS) sowie ein Bremsflüssigkeitsbehälter 28 sind zu einer Baugruppe zusammengefaßt, die als Ganzes in das Kraftfahrzeug eingebaut wird, indem die Montageplatte 14 von hinten her an den Rand der Spritzwand 10 rings um deren Öffnung 12 angelegt und an der Spritzwand festgeschraubt wird.

Bei dem in Fig. 1 dargestellten Beispiel hat das Kraftfahrzeug zusätzlich zu der Spritzwand 10 eine weiter vorne angeordnete zusätzliche Zwischenwand 30, die an die Zwischenwand 10 angeschweißt ist und den Motorraum 32 des Kraftfahrzeugs nach hinten begrenzt, so daß der Bremskraftverstärker 22 samt Hauptbremszylinder 24, ABS-Regeleinheit 26 und Bremsflüssigkeitsbehälter 28 im Zwischenraum zwischen den beiden Wänden 10 und 30 geschützt angeordnet sind. An der Rückseite der Zwischenwand 30 ist ein Halteblech 34 angeschweißt, in das eine Gummimuffe 36 eingelassen ist. Am Hauptbremszylinder 24 ist ein nach vorne ragender Haltezapfen 38 befestigt, der an seinem vorderen Ende zugespitzt ist und in die Gummimuffe 36 eingreift, wodurch die Bremsbetätigungsbaugruppe zusätzlich abgestützt ist.

Der pneumatische Bremskraftverstärker 22 hat ein vorderes Gehäuseteil 40 mit einer ebenen ringförmigen Anlagefläche 42, an der ein Flansch 44 des Hauptbremszylinders 24 mittels zweier Zuganker 46 und 48 befestigt ist. Die Zuganker 46 und 48 erstrecken sich durch das vordere Gehäuseteil 40 sowie ein ebenfalls topfförmiges hinteres Gehäuseteil 50 des Bremskraftverstärkers 22 hindurch nach hinten. Der Bremskraftverstärker 22 hat einen nach hinten ragenden, zylindrischen Rohrstutzen 52, der mit dem hinteren Gehäuseteil 50 einstückig hergestellt sein kann, beispielsweise durch Tiefziehen. Rings um den Rohrstutzen 52 ist am hinteren Gehäuseteil 50 eine ringförmige ebene Anlagefläche 54 ausgebildet. Das hintere Ende des Rohrstutzens 52 ist durch einen Faltenbalg 56 mit einer Betätigungsstange 58 verbunden, die im Bremskraftverstärker 22 axial verschiebbar geführt ist.

Die Montageplatte 14 hat ein zentrales Loch 60, das von einem nach hinten ragenden zylindrischen Kragen 62 umschlossen ist. Der Kragen 62 umschließt den Rohrstutzen 52 nahezu spielfrei oder sogar mit einer geringen radialen Vorspannung. Rings um den Kragen 62 ist an der Montageplatte 14 ein ebener, ringförmiger Flansch 64 ausgebildet, an dessen Vorderseite die Anlagefläche 54 des hinteren Gehäuseteils 50 anliegt. An der Vorderseite des Flansches 64 liegt eine Versteifungsplatte 66 an, die zur Pedalanordnung 20 gehört und einstückig mit nach hinten ragenden Lagerböcken 68 ausgebildet ist, beispielsweise als Stanz- oder Preßteil. Die beiden Zuganker 46 und 48 erstrecken sich durch vorgeformte, beispielsweise vorgestanzte, Löcher in der Montageplatte 14 und der Versteifungsplatte 66 hindurch und spannen beide mit dem hinteren Gehäuseteil 50 des Bremskraftverstärkers 22 fest zusammen. Die Versteifungsplatte 66 hat eine zentrale Aussparung 70, in die der Kragen 62 derart eingreift, daß die Versteifungsplatte 66 an der Montageplatte 14, und über diese auch in bezug auf den Bremskraftverstärker 22, zentriert ist.

An den Lagerböcken 68 ist eine Lagerachse 71 befestigt, die sich waagerecht und parallel zur Montageplatte 14 erstreckt und zur Lagerung eines Bremspedals 72 sowie eines Kupplungspedals 74 dient. Das Bremspedal 72 ist durch ein Gelenk 76 mit der Betätigungsstange 58 des Bremskraftverstärkers 22 verbunden. Das Kupplungspedal 74 ist, ebenfalls durch ein Gelenk 78, mit der Kolbenstange einer hydraulischen Betätigungsvorrichtung 80 für eine nicht dargestellte Schaltkupplung des Kraftfahrzeugs verbunden.

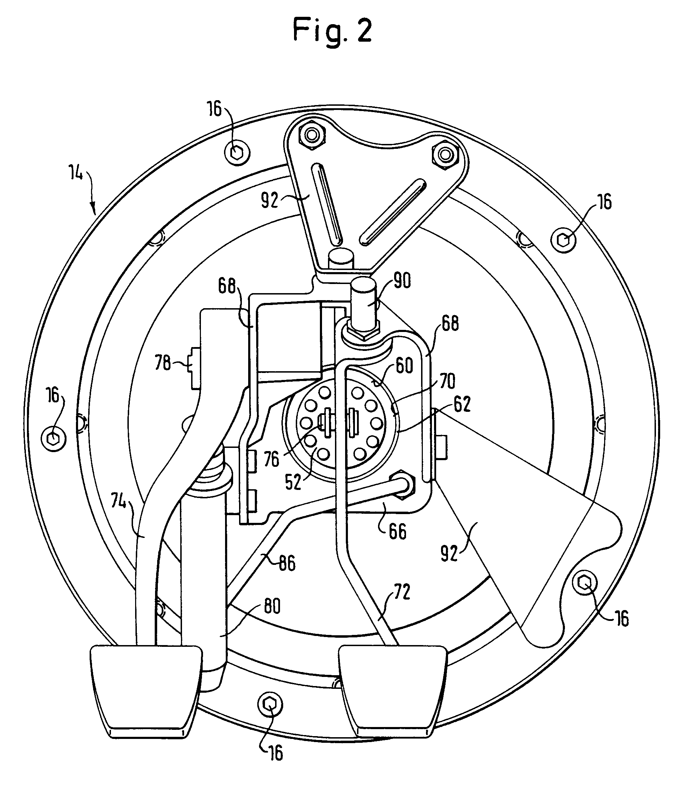

Im Ausführungsbeispiel gemäß Fig. 1 und 2 sind die beiden Zuganker 46 und 48 hohl. Die hydraulische Betätigungsvorrichtung 80 ist durch einen Schlauch 82 an das hintere Ende des oberen Zugankers 46 angeschlossen, und dessen vorderes Ende ist über ein Leitungsstück 84 an den Bremsflüssigkeitsbehälter 28 angeschlossen, der somit auch die hydraulische Flüssigkeit zum Betätigen der Schaltkupplung bereithält. Ein weiterer Schlauch 86 verbindet die Betätigungsvorrichtung 80 mit dem hinteren Ende des unteren Zugankers 48, dessen vorderes Ende gemäß Fig. 1 bis zur Endmontage im Kraftfahrzeug mit einem Stopfen 88 verschlossen ist.

Die Lagerböcke 68 können, wie aus Fig. 2 ersichtlich ist, Bestandteile einer an drei oder mehr Seiten der Versteifungsplatte 66 umlaufend nach hinten hochgekanteten Wand sein. An dieser ist gemäß Fig. 2 ein Bremslichtschalter 90 befestigt, über den auch bestimmte ABS-Funktionen gesteuert werden können. Falls erforderlich, sind die Lagerböcke 68 durch Streben 92 zusätzlich an der Montageplatte 14 abgestützt.

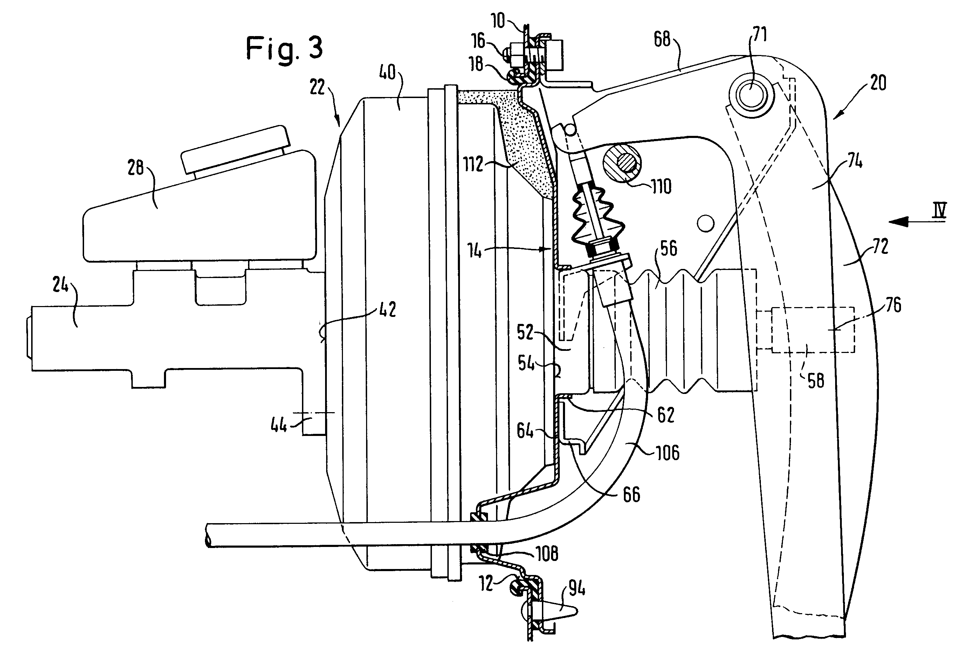

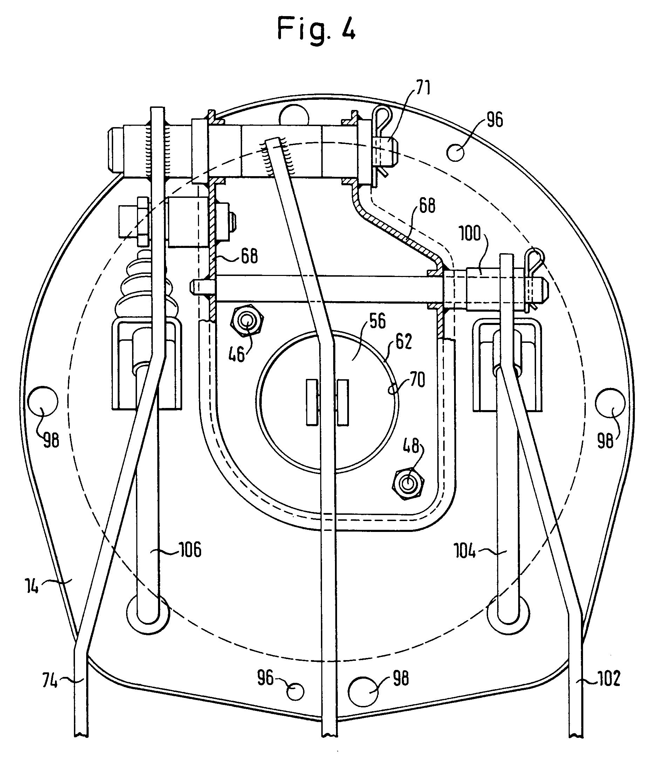

Um das lagerichtige Ansetzen der fertig vormontierten Bremsbetätigungsbaugruppe an der Spritzwand 10 zu erleichtern, sind an dieser gemäß Fig. 3 und 4 zwei kegelförmige Zentrierstifte 94 einander in bezug auf die Öffnung 12 gegenüberliegend angeordnet. Diese Zentrierstifte 94 dringen in je ein Loch 96 am Rand der Montageplatte 14 ein, so daß dann gewährleistet ist, daß die Schrauben 16 ohne Schwierigkeiten in ihre Löcher 98 eingesetzt werden können.

Das Ausführungsbeispiel gemäß Fig. 3 und 4 unterscheidet sich von dem in Fig. 1 und 2 dargestellten vor allem dadurch, daß die Pedalanordnung 20 teilweise anders ausgebildet ist. Sie weist eine weitere Lagerachse 100 auf, an der ein Gaspedal 102 gelagert ist; von diesem geht ein Bowdenzug 104 zum Steuern eines nicht dargestellten Vergasers oder einer Einspritzpumpe aus. In entsprechender Weise geht vom Kupplungspedal 74 ein Bowdenzug 106 aus; dieser ist in einer Gummimuffe 108 gehalten, die in die Montageplatte 14 eingesetzt ist. Dies mag als Beispiel dafür dienen, daß sämtliche Bauteile, die zur Bremsbetätigungsbaugruppe gehören, unmittelbar oder zumindest mittelbar derart mit der Montageplatte 14 verbunden sind, daß die Baugruppe leicht handhabbar und insbes. leicht in ein Kraftfahrzeug einbaubar ist.

Die Bremsbetätigungsbaugruppe weist vorzugsweise auch Vorrichtungen auf, die alle erforderlichen Justierungen schon vor dem Einbau der Baugruppe in ein Kraftfahrzeug ermöglichen. Als Beispiel ist in Fig. 3 und 4 ein Exzenter 110 dargestellt, durch den eine vorbestimmte Ruhestellung des Kupplungspedals 74 festgelegt ist.

Gefmäß Fig. 1 und 3 ist der Bremskraftverstärker 22 als solcher von üblicher Bauart. Daraus ergibt sich ein Zwischenraum 112 zwischen der Montageplatte 14 und dem hinteren Gehäuseteil 50 des Bremskraftverstärkers 22. Dieser Zwischenraum 112 ist ausgeschäumt, vorzugsweise mit Polyurethanhartschaum, oder mit anderem geräuschdämmendem Material ausgefüllt.

## Patentansprüche

1. Bremsbetätigungsbaugruppe für Kraftfahrzeuge, mit
- einem pneumatischen Bremskraftverstärker (22), der ein hinteres Gehäuseteil (50) mit einem nach hinten von ihm wegragenden Rohrstutzen (52) aufweist und in eine Öffnung (12) in der Spritzwand (10) eines Kraftfahrzeugs einsetzbar ist,
- einer Montageplatte (14), die zum Verschließen der Öffnung (12) an der Spritzwand (10) befestigbar ist, und
- einer Pedalanordnung (20), die in der Nähe des Rohrstutzens (52) angeordnete Lagerböcke (68) aufweist.
dadurch **gekennzeichnet,** daß
- die Montageplatte (14) ein vom Bremskraftverstärker (22) unabhängiges Bauteil mit einem zentralen Loch (60) ist,
- das hintere Gehäuseteil (50) des Bremskraftverstärkers (22) mit seinem Rohrstutzen (52) durch das zentrale Loch (60) nach hinten hindurchgreifend an der Montageplatte (14) befestigt ist, und
- die Lagerböcke (68) einstückig mit einer gemeinsamen Versteifungsplatte (66) ausgebildet sind, die eine zentrale Aussparung (70) aufweist, durch welche sich der Rohrstutzen (52) ebenfalls hindurcherstreckt.

2. Bremsbetätigungsbaugruppe nach Anspruch 1,
dadurch **gekennzeichnet,** daß die Montageplatte (14) rings um ihr zentrales Loch (60) einen Kragen (62) aufweist, an dessen Innenseite der Rohrstutzen (52), und an dessen Außenseite die Versteifungsplatte (66) zentriert ist.

3. Bremsbetätigungsbaugruppe nach Anspruch 2,
dadurch **gekennzeichnet,** daß an der Montageplatte (14) rings um den Kragen (62) ein ringförmiger Flansch (64) ausgebildet ist, der zwischen einer Anlagefläche (54) des hinteren Gehäuseteils (50) und der Versteifungsplatte (66) eingespannt ist.

4. Bremsbetätigungsbaugruppe nach Anspruch 3,
dadurch **gekennzeichnet,** daß das hintere Gehäuseteil (50) und die Montageplatte (14) ausgehend von dem ringförmigen Flansch (64) radial nach außen divergieren, so daß ein Zwischenraum (112) gebildet ist, und daß dieser ausgeschäumt ist.

5. Bremsbetätigungsbaugruppe nach einem der Ansprüche 1 bis 4,
dadurch **gekennzeichnet,** daß sich durch die Versteifungsplatte (66), die Montageplatte (14) und den Bremskraftverstärker (22) Zuganker (46, 48) hindurcherstrecken, an denen ein vor dem Bremskraftverstärker (22) angeordneter Hauptbremszylinder (24) befestigt ist.

6. Bremsbetätigungsbaugruppe nach Anspruch 5,
dadurch **gekennzeichnet,** daß
- an den Hauptbremszylinder (24) ein Bremsflüssigkeitsbehälter (28) angeschlossen ist,
- an den Lagerböcken (68) ein Kupplungspedal (74) gelagert ist, das mit einer hydraulischen Betätigungsvorrichtung (80) für eine Kupplung verbunden ist, und
- die Zuganker (46, 48) hohl sind und Bestandteile von Verbindungsleitungen zwischen dem Bremsflüssigkeitsbehälter (28) und der hydraulischen Betätigungsvorrichtung (80) bzw. zwischen dieser und der Kupplung bilden.

## Claims

1. A brake actuator assembly for motor vehicles, comprising
- a pneumatic brake pressure booster (22) which includes a rear housing portion (50) with a tubular connecting piece (52) projecting to the rear and is insertable in an opening (12) formed in the splashboard (10) of a motor vehicle,
- a mounting plate (14) adapted to be fastened to the splash-board (10) so as to close the opening (12), and
- a pedal arrangement (20) including support blocks (68) which are disposed near the tubular connecting piece (52).
**characterized** in that
- the mounting plate (14) is a member which is independent of the brake pressure booster (22) and has a central hole (60),
- the rear housing portion (50) of the brake pressure booster (22) has its tubular connecting piece (52) passing through the central hole (60) to the rear and fixed to the mounting plate (14), and
- the support blocks (68) are formed in one piece with a common stiffening plate (66) provided with a central recess (70) through which the tubular connecting piece (52) passes as well.

2. The brake actuator assembly as claimed in claim 1, characterized in that the mounting plate (14) includes a collar (62) around its central hole (60) and the tubular connecting piece (52) is centered at the inside of the collar, while the stiffening plate (66) is centered at the outside thereof.

3. The brake actuator assembly as claimed in claim 2, characterized in that an annular flange (64) is formed around the collar (62) at the mounting plate (14) and is clamped between an abutment surface (54) of the rear housing portion (50) and the stiffening plate (66).

4. The brake actuator assembly as claimed in claim 3, characterized in that the rear housing portion (50) and the mounting plate (14) diverge radially outwardly, starting from the annular flange (64), thus defining an intermediate space (112) which is foam-filled.

5. The brake actuator assembly as claimed in any one of claims 1 to 4, characterized in that tie bolts (46, 48) extend through the stiffening plate (66), the mounting plate (14), and the brake pressure booster (22), and that a master cylinder (24) disposed in front of the brake pressure booster (22) is fixed to the tie bolts.

6. The brake actuator assembly as claimed in claim 5, characterized in that
- a brake fluid reservoir (28) is connected to the master cylinder (24),
- a clutch pedal (74) is carried by the support blocks (68) and connected to an hydraulic actuating device (80) for a clutch, and
- the tie bolts (46, 48) are hollow and form part of connecting lines between the brake fluid reservoir (28) and the hydraulic actuating device (80) or the latter and the clutch, respectively.

## Revendications

1. Ensemble d'actionnement des freins d'un véhicule à moteur, comportant
- un amplificateur de la force de freinage (22), qui présente une partie arrière (50) de carter comportant un manchon tubulaire (52) s'éloignant d'elle vers l'arrière, et pouvant s'insérer dans une ouverture (12) située dans le tablier d'auvent (10) d'un véhicule à moteur,
- une plaque de montage (14) pouvant être fixée sur le tablier d'auvent (10) et destinée à fermer l'ouverture (12), et
- un dispositif à pédales (20) présentant des pièces de support (68) disposées au voisinage du manchon tubulaire (52),
caractérisé en ce que
- la plaque de montage (14) est une pièce indépendante de l'amplificateur de force de freinage (22) et comportant une ouverture centrale (60),
- la partie arrière (50) du carter de l'amplificateur de force de freinage (22) est fixée à la plaque de montage (14) en traversant, avec son manchon tubulaire (52), vers l'arrière, l'ouverture centrale (60), et
- les pièces de support (68) sont réalisées en formant une seule pièce avec une plaque de renfort commune (66), présentant un évidement central (70), au travers duquel passe, de même, le manchon tubulaire (52).

2. Ensemble d'actionnement de freins suivant la revendication 1, caractérisé en ce que la plaque de montage (14) présente, tout autour de son ouverture centrale (60), une collerette (62), sur la face interne de laquelle est centré le manchon tubulaire (52) et sur la face externe de laquelle est centrée la plaque de renfort (66)

3. Ensemble d'actionnement de freins suivant la revendication 2, caractérisé en ce que, sur la plaque de montage (14), tout autour de la collerette (62), est réalisée une bride annulaire (64), mise en serrage entre une surface d'appui (54) de la partie arrière (50) du carter et la plaque de renfort (66).

4. Ensemble d'actionnement de freins suivant la revendication 3, caractérisé en ce que la partie arrière (50) du carter et la plaque de montage (14) divergent radialement vers l'extérieur à partir de la bride annulaire (64), en formant un espace intercalaire (112), et en ce que ce dernier est rempli par de la mousse.

5. Ensemble d'actionnement de freins suivant l'une des revendications 1 à 4, caractérisé en ce que des tirants d' ancrage (46, 48), auxquels est fixé un cylindre principal de frein (24) disposé en avant de l'amplificateur de force de freinage (22), traversent la plaque de renfort (66), la plaque de montage (14) et l'amplificateur de force de freinage (22).

6. Ensemble d'actionnement de freins suivant la revendication 5, caractérisé en ce que
- un réservoir de liquide de freinage (28) est raccordé au cylindre principal de frein (24),
- sur les pièces de support (68), est fixée une pédale d' embrayage (74), reliée à un dispositif hydraulique d'actionnement (80) pour un embrayage, et
- les tirants d'ancrage (46, 48) sont creux et constituent respectivement des pièces des conduites de raccordement entre le réservoir de liquide de freinage (28) et le dispositif hydraulique d'actionnement (80), et entre ce dernier et l'embrayage.
